# EUROPEAN PATENT SPECIFICATION

(11) **EP 2 254 093 B1**
(45) Date of publication and mention of the grant of the patent: **04.06.2014**
(21) Application number: 09160921.4
(22) Date of filing: 22.05.2009
(51) Int. Cl.: G07C 9/00, G07F 7/10

(54) **Method and system for confirming the identity of a user**
Verfahren und System zur Bestätigung der Identität eines Benutzers
Procédé et système pour confirmer l'identité d'un utilisateur

(43) Date of publication of application: 24.11.2010
(73) Proprietor: Daon Holdings Limited, George Town, Grand Cayman (KY)
(72) Inventor: Peirce, Michael, Dublin 6 Dublin (IE)
(74) Representative: Moore, Barry

(56) References cited:
- EP-A1- 0 614 159
- EP-A2- 1 898 370
- WO-A1-03/058548
- US-A1- 2003 037 264
- US-A1- 2003 172 279
- US-A1- 2008 056 544
- US-B1- 6 779 113

## Description

This invention relates generally to authenticating individuals using identity credentials, and more particularly, to a method and system for confirming the identity of a user in possession of a device.

Governments and private sector entities have been known to issue several different types of credentials. Generally, credentials are physical objects that include data stored therein that is used to prove the identity of an individual. For example, Governments have been known to issue primary identity credentials such as electronic-passports (e-passports), national identification (ID) cards, driver licenses, and entitlement cards that each contain biometric identity data. Private sector entities such as employers, airports authorities, and banks have been known to issue credentials such as employee identity cards, registered traveler cards, and banking cards, respectively, that each contain biometric identity data.

Individuals have been known to simultaneously carry several different biometric identity credentials such as e-passports, driver's licenses, entitlement cards, employee identity cards and physical access cards as separate individual biometric identity credentials. Moreover, several different versions of an individual's biometric data may be created and authorized by different independent entities because governments and private sector entities use different systems to create their own separate biometric identity credentials. Furthermore, these systems are generally not configured to communicate with each other or with credentials issued by a different system. As a result, the biometric identity data of one issuing entity's system is generally not recognizable by another entity's system. Thus, a credential issued by one entity may not be used by another entity to confirm the identity of the bearer of the credential.

Known methods and systems for issuing biometric identity credentials typically require that each issuing entity separately collects enrollment biometric data, uses the data to perform large-scale identification (1:N) background searches across multiple databases, and issues a biometric identity credential that is compatible with the issuing entity's system. Thus, known methods may be costly due to significant investment in identity system infrastructure and continuing costs due to issuing, re-issuing and revoking credentials. Moreover, according to known methods, private sector entities duplicate government investment and effort when capturing and analyzing biometric data.

WO 03/058548 describes a security clearance card that stores data related to the owner of the card therein. Such data may include biometric data, driver's license information, and any other type of information associated with the owner of the card. Data concerning the owner of the card is categorized into different security levels, and access to the data is permitted only by card readers or operators of card readers that have the authority to access the particular security level associated with the data.

### SUMMARY OF THE INVENTION

Accordingly, a first embodiment provides a method as detailed in claim 1. The invention also relates to a system as detailed in claim 7. Advantageous embodiments are provided in the dependent claims.

### BRIEF DESCRIPTION OF THE INVENTION

In one aspect, a method of confirming the identity of a user is provided. The method includes processing biometric credentials having biometric and personal data stored therein, and storing the processed biometric and personal data on a device as device data. Moreover, the method includes generating a user configurable policy including identities of a plurality of authenticating entities. Each of the authenticating entities is associated with one of a plurality of levels of trust and a predetermined default rule corresponding to the one level of trust. The predetermined default rule is one of a plurality of default rules that are configured to release a portion of the device data in accordance with a corresponding one of the levels of trust. Furthermore, the method includes storing the user configurable policy in the device, presenting, by a user in possession of the device, the device to one of the authenticating entities at an authentication station, and requesting biometric and personal data of the user from the device data. The bioinetric data corresponds to at least one biometric feature desired for authenticating the user, and the requesting operation is performed by a workstation of the one authenticating entity. Additionally, the method includes consulting the user configurable policy in response to the requesting operation to determine whether the requested biometric data is permitted to be released from the device data, and releasing the requested biometric and personal data from the device data to the one authenticating entity when the default rule associated with the one authenticating entity permits releasing the requested biometric and personal data.

The method also includes validating a logical link between the user in possession of the device and the released personal data by establishing a logical link between the released personal data and the released biometric data, by certifying that a biometric security feature associated with the released biometric data and a personal security feature associated with the released personal data have not been modified and were issued in an originally processed credential by a suitable issuer. The validating operation also includes authenticating a biometric link between the user and the released biometric data by comparing the released biometric data against actual biometric data captured from the user in possession of the device. The method also includes displaying a message after the validating operation indicating a result of the validating operation.

In another aspect, a system for confirming the identity of a user is provided. The system includes at least one computer configured as a server that includes a database and at least one workstation positioned at an authenticating station. The workstation includes at least a workstation computer operationally coupled to a biometric credential reading device, wherein the server and the at least one workstation communicate. Moreover, the system includes a device having stored therein a set of biometric data and a set of personal data as device data, wherein each item of biometric data included in the set of biometric data corresponds to an item of personal data included in the set of personal data such that each item of biometric data is associated with a biometric security feature and each item of corresponding personal data is associated with a personal security feature.

The device is configured to store a user configurable policy including identities of a plurality of trusted authenticating entities. Each of the trusted authenticating entities is associated with one of a plurality of levels of trust and a default rule corresponding to the one level of trust, and the default rule is one of a plurality of default rules that permit releasing a portion of the device data in accordance with a corresponding one of the levels of trust, wherein each item of biometric data includes at least one representation of a biometric feature of an individual. Moreover, the device is configured to consult the user configurable policy in response to a request for biometric and personal data, to determine whether the requested biometric and personal data are permitted to be released from the device data, and to release the requested biometric and personal data from the device data when an appropriate one of the default rules permits releasing the requested biometric and personal data.

### BRIEF DESCRIPTION OF THE DRAWINGS

Figure 1 is a simplified block diagram of a computer system used for authenticating a user in possession of a universal biometric credential;
Figure 2 is an expanded block diagram of a server architecture of the computer system shown in Figure 1;
Figure 3 is a flowchart illustrating an exemplary process for generating a universal biometric credential;
Figure 4 is a diagram that represents data as stored in a carrying device;
Figure 5 is another diagram that represents data as stored in the carrying device;
Figure 6 is a simplified block diagram illustrating exemplary relationships established during authentication;
Figure 7 is a diagram illustrating an exemplary user configurable policy; and
Figure 8 is a flowchart illustrating an exemplary process for confirming the identity of a user in possession of a universal biometric credential.

### DETAILED DESCRIPTION OF THE INVENTION

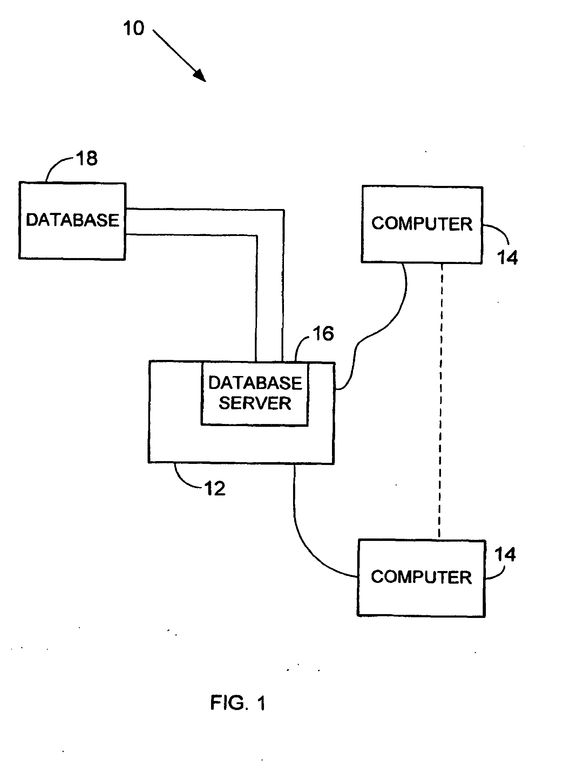

Figure 1 is a simplified diagram of a computer system 10 including a server system 12, and a plurality of client sub-systems, also referred to as end user computer systems 14, connected to server system 12. Computer system 10 is used for confirming the identity of a user as described herein. Computerized modeling and grouping tools, as described below in more detail, are stored in server 12 and can be accessed by an operator at any one of end user computer systems 14. A database server 16 is connected to a database 18 containing information on a variety of matters, as described below in greater detail. In one example, centralized database 18 is stored on server system 12 and can be accessed by potential end users at one of end user computer systems 14 by logging onto server system 12 through one of end user computer systems 14. In an alternative example, database 18 is stored remotely from server system 12 and may be non-centralized. It should be appreciated that database 18 may be any kind of data storage.

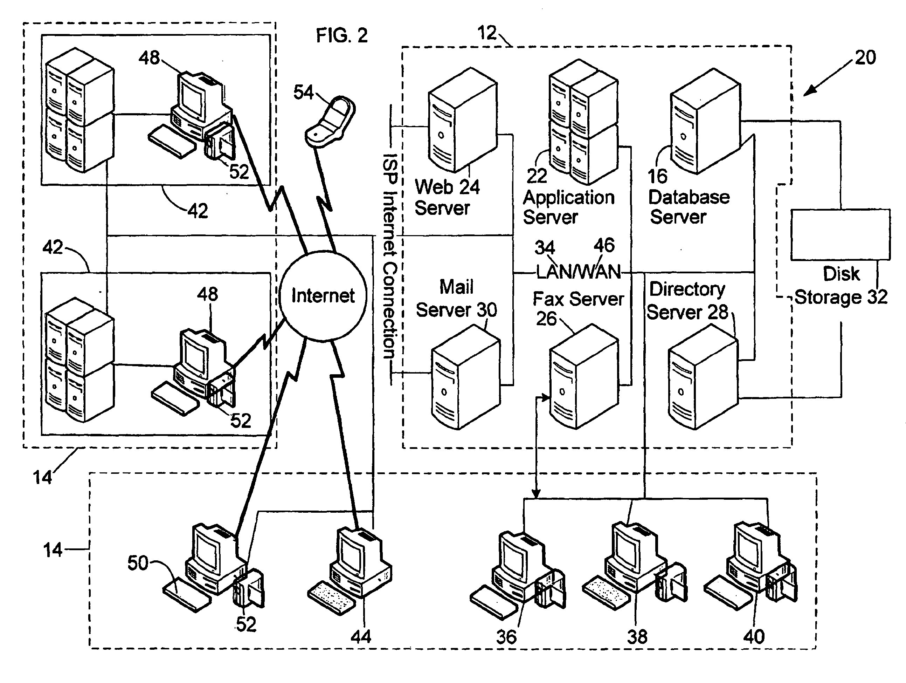

Figure 2 is an expanded block diagram of a server architecture of a computer system 20. Components in system 20, identical to components of system 10 (shown in Figure 1), are identified in Figure 2 using the same reference numerals as used in Figure 1. Computer system 20 includes server system 12 and end user computer systems 14. Server system 12 further includes database server 16, an application server 22, a web server 24, a fax server 26, a directory server 28, and a mail server 30. Disk storage unit 32 is coupled to database server 16 and directory server 28. Servers 16, 22, 24, 26, 28 and 30 are coupled in a local area network (LAN) 34. In addition, a system administrator's workstation 36, a user workstation 38, and a supervisor's workstation 40 are coupled to LAN 34. However, in other examples, the servers 16, 22, 24, 26, 28, 30 and the workstations 36, 38, 40 may be coupled in a wide area network (WAN) 46.

Server system 12 is configured to be communicatively coupled to various individuals, including employee end users 42 and to third party end users including, but not limited to, clients/customer computers 44 and client universal biometric carrying devices 54, using the internet. However, in other examples, system 12 may be communicatively coupled to employee end users 42 and third party end users 44 using the LAN 34 or the WAN 46.

Any authorized individual having a workstation 48 can access computer system 20. At least one of the end user computer systems 14 includes a manager workstation 50. Workstations 48 and 50 are personal computers configured to communicate with server system 12. Furthermore, fax server 26 communicates with end user computer systems 14, including manager workstation 50 using a telephone link. Fax server 26 is configured to communicate with other end users 36, 38 and 40 as well.

Workstations 36, 38, 40, 48 and 50 include computers that may include devices for reading biometric data from computer-readable recording media, such as a compact disc-read only memory (CD-ROM), a magneto-optical disc (MOD), a digital versatile disc (DVD) and a universal serial bus (USB) device. Additionally, it should be understood that the computers included in the workstations 36, 38, 40, 48 and 50 include memory (not shown). Moreover, workstations 36, 38, 40, 48 and 50 include display devices, such as, but not limited to, liquid crystal displays (LCD), cathode ray tubes (CRT) and color monitors. Furthermore, workstations 36, 38, 40, 48 and 50 include printers and input devices such as, but not limited to, a mouse (not shown), keypad (not shown), a keyboard, a microphone (not shown), and a universal biometric credential reading device 52. The reading device 52 is any kind of smart card reader. However, it should be appreciated that in other examples, the reading device 52 may be any device that facilitates reading multiple existing identity credentials from a universal biometric credential. Such devices include, but are not limited to, a barcode reader, a document scanner, and any kind of contactless reader. Moreover, in other examples, the reading device 52 may be replaced by security personnel that manually read and collect identity credentials and identity credential data.

Application server 22 includes a processor (not shown) and a memory (not shown). It should be understood that, as used herein, the term processor is not limited to just those integrated circuits referred to in the art as a processor, but broadly refers to a computer, an application specific integrated circuit, and any other programmable circuit. It should be understood that computer programs, or instructions, are stored on a computer-readable recording medium, such as server 22 memory (not shown), and are executed by the processor. The above examples are exemplary only, and are thus not intended to limit in any way the definition and/or meaning of the term "processor."

The memory (not shown) in application server 22, and the memory in the computers of workstations 36, 38, 40, 48 and 50, can be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), an optical ROM disc, such as a CD-ROM or DVD-ROM disc, and disc drive or the like.

It should be appreciated that the memory of application server 22, and the memory of the computers included in the workstations 36, 38, 40, 48 and 50, is used to store executable instructions, or computer programs, thereon. The term "computer program" is intended to encompass an executable program that exists permanently or temporarily on any computer-readable recordable medium that causes the computer or computer processor to execute the program.

The universal biometric carrying device 54 is a cellular phone capable of storing biometric data and personal data in a universal format. However, it should be appreciated that in other examples, the carrying device 54 may be any personal device capable of storing biometric and personal data in the universal format such as, but not limited to, a smart phone, any type of portable communications device having wireless capabilities such as a personal digital assistant (PDA), and a USB device. Moreover, in other examples, the biometric and personal data may optionally be stored in any combination of personal devices that are each capable of storing biometric and personal data in the universal format, or may optionally be stored in the system 20, such that the biometric and personal data are accessible over a data network. It should be understood that the biometric carrying device 54 includes at least a processor (not shown) and a memory (not shown). The memory can be a computer-readable recording medium used to store at least biometric data in the universal format, and store computer programs or executable instructions that are executed by the carrying device 54. Moreover, the memory (not shown) may include ROM, RAM, PROM, EPROM, smart card, SIMs, WIMs or any other medium from which a computing device can read computer programs or executable instructions.

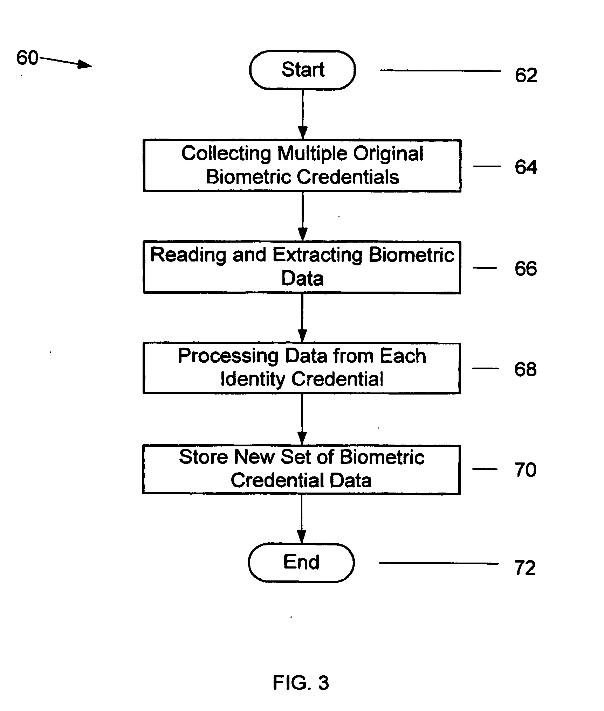

Figure 3 is a flowchart 60 illustrating an exemplary process for generating a universal biometric credential. The method starts 62 by collecting a plurality of original biometric credentials and personal data belonging to an individual. The plurality of original biometric credentials includes first, second and third credentials. The first credential is an electronic passport (e-passport) and includes biometric data corresponding to fingerprint and face data of the individual. The second credential includes biometric data corresponding to iris data of the individual, and the third credential also includes fingerprint data as well as vascular data of the individual. The face biometric data is a face photo. However, in other examples the face biometric data may include any data that relates to an individual's face such as, but not limited to, electronic data that represents the contours of the individual's face. The fingerprint data and iris data may be in any form that facilitates authenticating the individual, such as, but not limited to, images, templates and electronic data representations. Moreover, it should be understood that any biologic feature may be included as biometric data in a biometric credential, and that the biometric data may take any form such as, but not limited to, images, photographs, templates and electronic data representations. Furthermore, it should be appreciated that as used herein biometric credentials may be any physical object that includes data stored therein which is used to prove the identity of an individual such as, but not limited to, e-passports, national identification cards, drivers licenses, entitlement cards, employee identity cards and banking cards.

After collecting the original biometric credentials 64, the biometric data and personal data included in each of the original credentials are read and extracted 66 by the biometric credential reading device 52. Security features are generally applied to the biometric data and to the personal data by the original issuer of the original biometric credential. Thus, reading and extracting 66 the biometric data and personal data also includes determining whether or not corresponding original security features are included in the biometric and personal data, extracting the original security features with the biometric and personal data, and ensuring that these security features are valid. Validating a security feature of the biometric data and a security feature of the personal data ensures that the extracted biometric data and extracted personal data are trustworthy, have not been modified, and were issued in an original biometric credential by a trustworthy or dependable issuer.

It should be appreciated that the term "personal data" as used herein includes any demographic information regarding an individual as well as detail information pertinent to the individual. Such demographic information includes, but is not limited to, an individual's name, age, date of birth, address, citizenship and marital status. Moreover, detail information includes, but is not limited to, contact details such as telephone numbers, and the purpose of the original credential. For example, when the original credential is a payment card the purpose of the payment card is to make payment transactions.

The biometric data and the personal data are each encrypted with a same electronic security feature in the form of a digital signature. Although digital signatures are used as the electronic security feature, it should be appreciated that in other examples the security feature may be any type of electronic security feature that facilitates ensuring the extracted biometric data and extracted personal data are proper and trustworthy as described herein. Moreover, it should be understood that in other examples the extracted biometric data and the extracted personal data are not required to be encrypted with a security feature such that the extracted data may be accessed directly. Furthermore, it should be appreciated that the original security feature of each credential is different.

Upon deriving the security features, appropriate decryption is performed to ensure that the extracted biometric data and the extracted personal data can be properly read. The extracted biometric data and the extracted personal data, including the associated security features, may optionally be stored in system 20 in their original form. Alternatively, the extracted biometric and personal data, and associated security features, may optionally be stored in system 20 in any form where an encryption layer has been removed from the extracted biometric data and from the extracted personal data, or when further processing has been applied. It should be appreciated that the extracted biometric data and the extracted personal data are stored in system 20 such that they are associated with the security feature included in the original credential that the biometric and personal data were extracted from. Moreover, the identity of the individual corresponding to the extracted original biometric data, the extracted original biometric data itself, and any additional information required to verify the authenticity of, or required for access to, the extracted original biometric data may optionally be stored in system 20.

The extracted biometric data may be used to derive additional data such as, but not limited to, biometric feature templates and confidence scores that may also optionally be stored in system 20. Biometric feature templates are a processed form of the extracted biometric data and constitute a computer generated template that includes at least one representation of a captured biometric feature. Specifically, the templates comprise a collection of summary data, extracted from captured biometric image or sample data. For example, summary data in the form of data points representing features present in a fingerprint may each be included, or listed, in the templates as coordinates (X, Y, θ).

The extracted biometric data is also used to determine a confidence score during authentication that reflects a level of trust in the authentication result based on a comparison match. That is, the extracted biometric data is compared against actual biometric data captured from a user such that a numerical score, based on the quality of the comparison match, is determined for at least one biometric comparison match. It should be appreciated that a numerical score based on the quality of a comparison match, may be determined for each of a plurality of different biometric comparison matches. Thus, a plurality of numerical scores may also be determined. The numerical scores for each comparison match are combined using any desirable mathematical computation to yield the confidence score, and the authentication is deemed trustworthy and an individual's identity confirmed when the confidence score is at least equal to a predetermined threshold value. It should be appreciated that the confidence scores are based on how well captured biometric features match against the extracted original biometric data.

By virtue of being at least equal to the predetermined threshold value, the confidence scores reflect an adequate level of trust in the authentication result. Moreover, it should be appreciated that trust in the authentication result increases as the number of biometric features compared increases. Furthermore, it should be appreciated that as the margin by which the confidence score exceeds the predetermined threshold increases, the trust in the authentication result also increases.

After reading and extracting the biometric and personal data 66 from the plurality of biometric credentials, the biometric data and the personal data 66 are processed 68 to generate a set of biometric data and a set of personal data, respectively, by converting the extracted biometric and personal data into a universal format 68 such that the sets of data may be stored 70 on the biometric carrying device 54. After storing the sets of data, the process ends 72. It should be appreciated that the biometric data and the personal data extracted from each of the plurality of biometric credentials are included in the set of biometric data and the set of personal data, respectively, and are associated with the corresponding original security feature of the issuer of the original biometric credential.

The universal format is an XML representation that contains data. However, it should be understood that in other examples, any type of computer-readable data containing format may be used that facilitates reading the sets of biometric data and personal data by trusted authenticating entities as described herein. By virtue of universally formatting the biometric data and personal data into sets of data, the sets of data can be used to facilitate confirming an individual's identity by any authorized authenticating entity. Moreover, by virtue of storing the set of biometric data in a universal format on a universal biometric carrying device 54, the universal biometric carrying device 54 constitutes a Universal Biometric Credential (UBC). Furthermore, the set of biometric data and the set of personal data constitute original Universal Biometric Credential (UBC) data. It should be understood that the set of biometric data includes the fingerprint and face data from the first credential, the iris data from the second credential, and the fingerprint and vascular data from the third credential. Additionally, the set of personal data includes the age personal data of the first credential, the phone number personal data of the second credential, and the birth date personal data of the third credential.

The original UBC data is also associated with labels that include information about the biometric and personal data extracted from each biometric credential, such as, but not limited to, the issuer of the credential, the issue date, the issue location, the credential type and an identifier of the original biometric credential. Moreover, it should be appreciated that biometric and personal data from a plurality of biometric credentials for an individual can be stored on the same universal biometric carrying device 54. Furthermore, it should be understood that additional biometric and personal data may be added to the original UBC data after initially assembling the original UBC data. Additionally, it should be appreciated that in other examples biometric data and personal data, included in the original UBC data, may be removed from the UBC data. It should also be appreciated that any authorized issuer may create or generate the original UBC data.

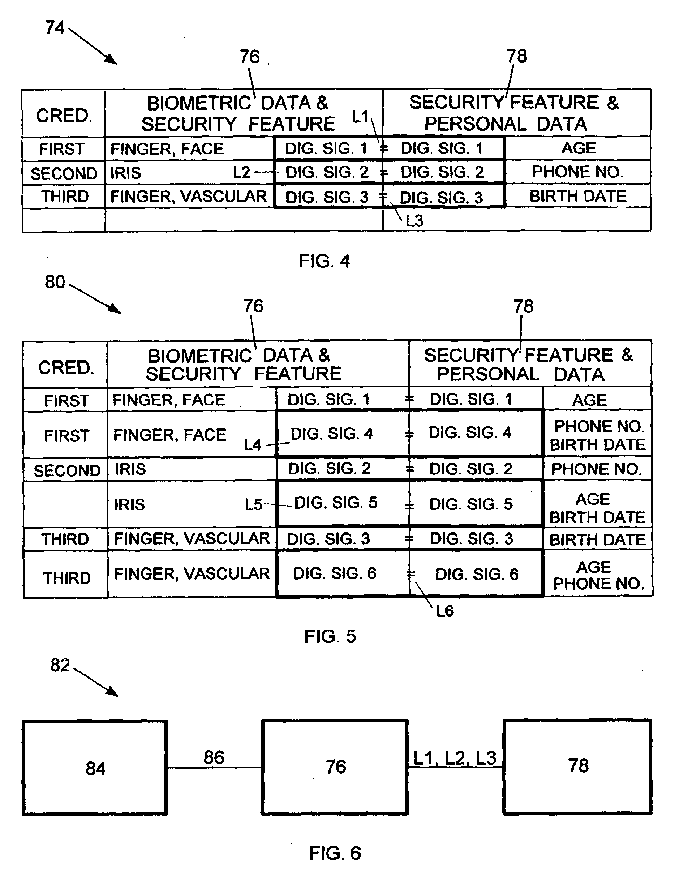

Figure 4 is a diagram 74 that represents UBC data as configured and stored on the carrying device 54. Specifically, the diagram 74 includes the set of biometric data 76 and the set of personal data 78. As shown, the biometric and personal data extracted from the first credential are each separately associated with the security feature DIG. SIG. 1 that was also extracted from the first credential. Likewise, the biometric and personal data extracted from the second and third credentials are each separately associated with the security features extracted from their respective credentials. That is, the finger and face biometric data of the first credential is associated with a security feature in the form of digital signature 1 (DIG. SIG. 1), the iris biometric data of the second credential is associated with a security feature in the form of digital signature 2 (DIG. SIG. 2), and the finger and vascular biometric data of the third credential is associated with a security feature in the form of digital signature 3 (DIG. SIG. 3). Likewise, the age personal data of the first credential is associated with DIG. SIG. 1, the phone number personal data of the second credential is associated with DIG. SIG. 2, and the birth date personal data of the third credential is associated with DIG. SIG. 3. It should be appreciated that the security features associated with the biometric and personal data may be referred to as biometric security features and personal security features, respectively.

Because the digital signatures for the biometric data and personal data extracted from the same credential are the same , the digital signatures can be used to relate, or associate, the biometric data extracted from a credential to the personal data extracted from the same credential, and vice versa. As such, the digital signatures may constitute a logical link between the biometric data and the personal data extracted from a same credential. Such a logical link is provided when the digital signatures are validated, or verified as being trustworthy. Verifying that the digital signatures are trustworthy also certifies the associated biometric and personal data. Thus, when DIG. SIG. 1, DIG. SIG. 2 and DIG. SIG. 3 are verified as trustworthy, corresponding logical links L1, L2 and L3 are provided between the biometric data of the first, second and third credentials and the personal data of the first, second and third credentials, respectively.

Although verified digital signatures constitute a logical link between biometric and personal data extracted from the same credential, it should be appreciated that in other examples an additional security feature, in the form of an issuer digital signature, may be added to the biometric and personal data extracted from each credential such that the biometric data extracted from each credential is also associated with the personal data extracted from other credentials that are different from the same credential.

Figure 5 is a diagram 80 that represents the original UBC data as configured and stored on the carrying device 54. Specifically, diagram 80 includes the original UBC data and associated digital signatures as shown in Figure 4, as well as additional security features in the form of issuer digital signatures DIG. SIG. 4, DIG. SIG. 5, DIG. SIG. 6. Thus, each item of biometric data 76 is associated with a plurality of different security features. For example, the finger and face biometric data extracted from the first credential is associated with the security features DIG. SIG. 1 and DIG. SIG. 4. Issuer digital signature DIG. SIG. 4 is separately associated with the finger and face biometric data extracted from the first credential, and is separately associated with the phone number and birth date personal data extracted from the second and third credentials, respectively. It should be appreciated that by virtue of being separately associated with the biometric data extracted from the first credential and being separately associated with personal data extracted from the second and third credentials, when validated, DIG. SIG. 4 constitutes a logical link L4 between the biometric data extracted from the first credential and the personal data extracted from the second and third credentials. Consequently, issuer digital signature DIG. SIG. 4 associates the finger and face biometric data extracted from the first credential with the phone number and birth date personal data extracted from the second and third credentials, respectively. It should be understood that the issuer digital signature DIG. SIG. 4 associates the biometric data extracted from the first credential with personal data extracted from two credentials different than the first credential.

Similar to issuer digital signature DIG. SIG. 4, issuer digital signature DIG. SIG. 5 associates the iris biometric data extracted from the second credential with the age and birth date personal data extracted from the first and third credentials, respectively. Thus, issuer digital signature DIG. SIG. 5 associates the biometric data extracted from the second credential with personal data extracted from two different credentials. Likewise, issuer digital signature DIG. SIG. 6 associates the finger and vascular biometric data extracted from the third credential with the age and phone number personal data extracted from the first and second credentials, respectively. Thus, issuer digital signature DIG. SIG. 6 associates the biometric data extracted from the third credential with personal data extracted from two different credentials. Although the biometric data extracted from one credential are associated with personal data extracted from two different credentials, it should be appreciated that in other examples each of the issuer digital signatures DIG. SIG 4, DIG. SIG. 5, DIG. SIG. 6 may associate the biometric data extracted from one credential with the personal data extracted from any number of different credentials.

It should be understood that logical links L4, L5, L6 are provided when issuer digital signatures DIG. SIG. 4, DIG. SIG. 5, DIG. SIG. 6, respectively, are validated, or verified as being trustworthy. Verifying that the issuer digital signatures DIG. SIG. 4, DIG. SIG. 5, DIG. SIG. 6 are trustworthy also certifies the associated biometric and personal data. Thus, when DIG. SIG. 4, DIG. SIG. 5 and DIG. SIG. 6 are verified as trustworthy, corresponding logical links L4, L5 and L6 are provided such that biometric data extracted from one credential is associated with personal data extracted from all of the different credentials, and vice versa. Moreover, it should be understood that including issuer digital signatures DIG. SIG. 4, DIG. SIG. 5, DIG. SIG. 6 in the biometric data 76 and the personal data 78 facilitates providing additional security for the biometric 76 and personal data 78.

Figure 6 is a simplified block diagram 82 illustrating exemplary relationships established during authentication between a user 84 in possession of a carrying device 54, the set of biometric data 76 included in the UBC data, and the set of personal data 78 included in the UBC data. Specifically, the user 84 is related to the biometric data 76 by way of a biometric link 86. The biometric link 86 is established and authenticated when there is a biometric match between biometric data captured from the user 84 and corresponding certified biometric data included in the set of biometric data 76. Consequently, it should be appreciated that by authenticating the biometric link 86 and providing a corresponding one of the logical links L1, L2 and L3, a logical link is effectively validated between the user 84 and the personal data 78.

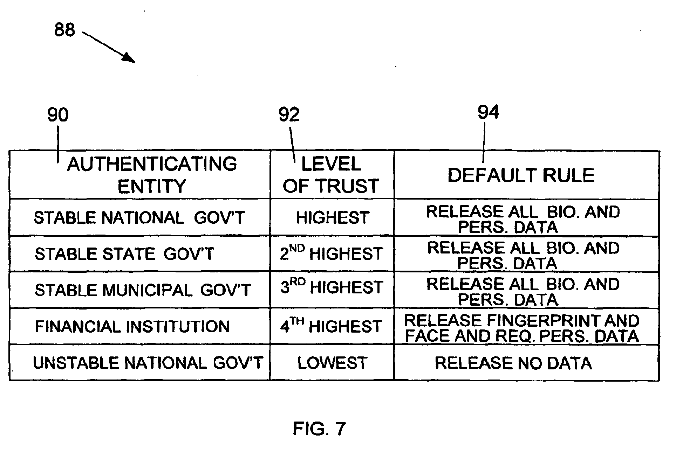

Figure 7 is a diagram illustrating an exemplary user configurable policy 88 that is stored in carrying device 54, and is for protecting access to the biometric data 76 and the personal data 78 included in the UBC data such that more trusted authenticating entities are granted access to at least a portion of the UBC data and less trusted authenticating entities are denied access to the UBC data. Specifically, the user configurable policy 88 includes the identities of a plurality of trusted authenticating entities 90, levels of trust 92 and default rules 94, such that each of the authenticating entities 90 is associated with one of the levels of trust 92 and is associated with one of the default rules 94. The trusted authenticating entities 90 include stable national governments, stable state governments, stable municipal governments, financial institutions and unstable national governments. It should be appreciated that in other examples the trusted authenticating entities 90 may include any entity authorized to confirm the identity of a user as described herein.

The levels of trust 92 define categories or degrees of trust for each of the trusted authenticating entities 90 that vary from a highest level of trust to a lowest level of trust. Stable national governments are assigned a highest level of trust because stable national governments are generally considered to be the most trustworthy type of authenticating entity. Moreover, stable state and municipal governments are assigned a second and a third highest level of trust, respectively, because stable state and municipal government authenticating entities 90 are generally considered to be trustworthy. Financial institutions are assigned a fourth highest level of trust, and unstable national governments of third world countries are assigned a lowest level of trust because authenticating entities 90 of unstable national governments of third world countries are generally considered to be the least trustworthy.

It should be understood that the user configurable policy 88 is generated by associating each of a plurality of authenticating entities 90 with one of the levels of trust 92. After associating each of the authenticating entities 90 with one of the levels of trust 92, an appropriate one of a plurality of default rules 94 is associated with each of the authenticating entities 90. Specifically, an appropriate one of the default rules 94 is associated with each particular authenticating entity 90 that corresponds to the level of trust 92 previously associated with a particular authenticating entity 90.

Moreover, it should be appreciated that the default rules 94 are configured to release a predetermined portion of the UBC data in accordance with a corresponding one of the levels of trust 92 associated with the particular authenticating entity 90. For example, default rules 94 may indicate that all biometric data and all personal data requested by a national authenticating entity 90 is to be released from the UBC data to the stable national government authenticating entity 90. Moreover, default rules 94 may indicate that fingerprint and face biometric data, and the requested personal data, are to be released from the UBC data to a financial institution authenticating entity 90. Furthermore, the default rules 94 may indicate that no data is to be released from the UBC data to the unstable national government authenticating entity 90.

It should be understood that the user of a carrying device 54 may configure the policy 88 by defining the default rules 94 and the levels of trust 92 in any desirable manner that facilitates authentication as described herein. Moreover, the user of a carrying device 54 may reconfigure the policy 88 by changing the definitions of the default rules 94 and levels of trust 92. For example, the user may reconfigure the default rule 94 for a stable national government authenticating entity 90 such that the carrying device 54 releases only face biometric data and the requested personal data from the UBC data to stable national government authenticating entities 90, instead of all requested biometric data and the requested personal data. Furthermore, the user of a carrying device 54 may reconfigure the policy 88 so that the user is prompted to manually approve any release of data, before that data is released. Although one user configurable policy 88 stored in the carrying device 54 is discussed, it should be appreciated that in other examples any number of user configurable policies 88 may be generated and stored in the carrying device 54.

When confirming the identity of the user 84, authenticating entities 90 establish that the provided biometric data is trustworthy and has not been modified by determining a biometric data level of trust using an authentication configurable policy. The authentication configurable policy constitutes a list of security features and a set of authentication default rules stored in the authentication workstation 48. Moreover, similar to the user configurable policy 88 used to control access to the UBC data, the authentication configurable policy defines trustworthiness levels for security features that vary from the most trustworthy to the least trustworthy, and assigns levels of trust accordingly. For example, security features associated with a stable national government may be assigned a highest level of trust, security features associated with stable state or provincial governments may be assigned a second highest level of trust, security features associated with stable municipal governments may be assigned a third highest level of trust, security features associated with financial institutions may be assigned a fourth highest level of trust, and security features associated with unstable national governments of third world countries may be assigned a lowest level of trust.

Each authentication default rule is configured to accept biometric data and personal data based on the level of trust assigned to the corresponding security feature. For example, the authentication default rule for security features having a highest level of trust, as issued by stable national governments, may indicate that all biometric data and all personal data associated with such security features are acceptable for authentication. However, the authentication default rule for security features having a lowest level of trust, as issued by unstable national governments, may indicate that biometric data and personal data associated with such security features are not acceptable for authentication.

It should be understood that the authenticating entity may configure the authentication policy by defining the authentication default rules and the levels of trust in any desirable manner that facilitates confirming the identity of a user as described herein. Moreover, the authenticating entity may reconfigure the authentication policy by changing the definitions of the authentication default rules and levels of trust. For example, the authenticating entity may reconfigure the authentication default rule for security features having a highest level of trust such that only security features issued by the United States Federal Government have a highest level of trust and are acceptable for authentication, instead of security features issued by all stable national governments having a highest level of trust. Although an authentication policy to determine which security features and associated biometric data are acceptable for authentication is discussed, it should be appreciated that in other examples any method may be used to assign levels of trust to the security features that facilitate confirming the identity of a user as described herein. Furthermore, although one authentication policy is discussed, it should be appreciated that in other examples any number of authentication policies may be generated and stored in the authentication workstation 48. Additionally, the authenticating entity 90 may reconfigure the authentication policy to manually prompt security personnel for approval of a security feature received from a carrying device 54.

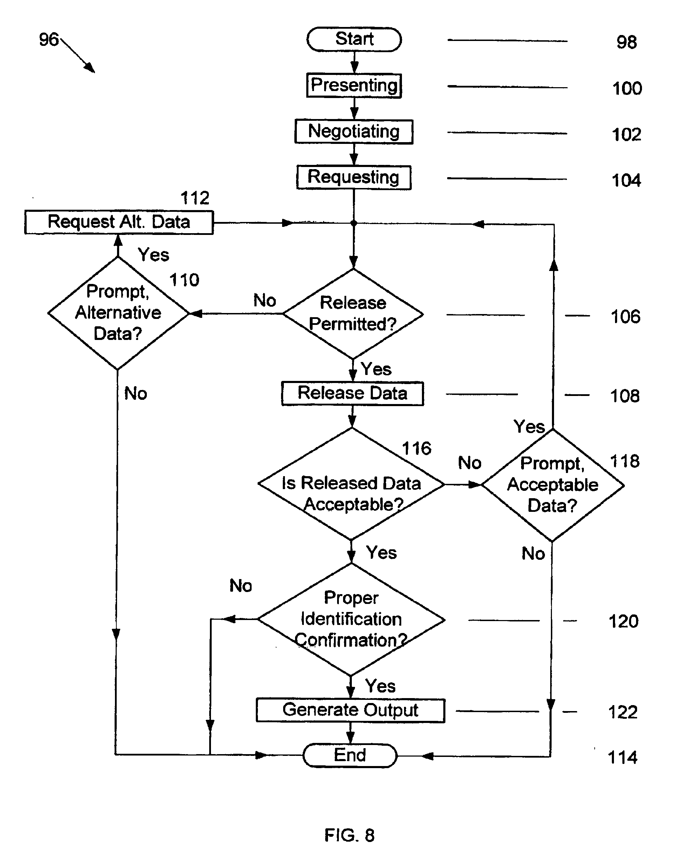

Figure 8 is a flowchart 96 illustrating an exemplary process for confirming the identity of a user 84 in possession of a carrying device 54 by authenticating the biometric link 86 with an item of certified biometric data included in the set of biometric data 76, and by providing a corresponding one of the links L1, L2, L3. An authenticating entity 90 (not shown) performs authentication at an authentication workstation 48, such that authentication occurs between an authenticating entity 90 and the user.

The process starts 98 with a user 84 in possession of a UBC carrying device 54 presenting 100 the UBC carrying device 54 to an authenticating entity to begin negotiating 102 between the carrying device 54 and the authenticating entity 90. Negotiating 102 is for determining biometric data, included in the UBC data, that corresponds to at least one biometric feature desired to be used for authenticating the biometric link 86. Specifically, after the carrying device 54 is presented to the authenticating entity 100, the authenticating entity 90 automatically starts negotiating 102 by requesting 104 at least one item of biometric data included in the UBC data that the authenticating entity will accept for authentication, and by requesting 104 personal data that is desired to be proven and that corresponds to the at least one item of biometric data. As part of the request 104 for biometric and personal data, the authenticating entity 90 stipulates that biometric data and personal data acceptable for authentication are to be associated with a same security feature issued by an issuer suitable to the authenticating entity 90. It should be understood that data acceptable for authentication is to be associated with a security feature that can be validated to ensure that the security feature itself is trustworthy. Ensuring that the security feature itself is trustworthy also ensures, or certifies, that the original biometric and personal data are trustworthy, have not been modified and were issued in an original credential by a stated issuer. Thus, biometric data associated with a trustworthy security feature constitutes certified biometric data. Moreover, personal data associated with a trustworthy security feature constitutes certified personal data. It should be appreciated that by virtue of being determined trustworthy, the security feature associated with the biometric data and the corresponding personal data, constitutes a corresponding one of the logical links L1, L2, L3.

In response to the request 104 for biometric and personal data , the carrying device 54 consults the user configurable policy 88 to determine whether the default rule 94 corresponding to the requesting authenticating entity 90 permits releasing the requested data from the UBC data. When the appropriate default rule 94 permits releasing 106 the requested biometric and personal data, the carrying device 54 releases 108 the requested biometric 76 and personal data 78 from the UBC data to the authenticating entity 90. Otherwise, when the appropriate default rule 94 does not permit releasing 106 the requested biometric and personal data, the carrying device 54 prompts 110 the authenticating entity 90 to select from alternative biometric data and personal data 110 that the appropriate default rule 94 permits releasing from the UBC data. If the authenticating entity 90 accepts the prompt 110, the authenticating entity requests 112 the alternative biometric data and personal data, the carrying device 54 consults the appropriate default rule 94 for permission to release 106 the data, and then the carrying device 54 releases the data 108. However, if the authenticating entity 90 does not accept the prompt 110, the process ends 114.

After the biometric data and personal data are released 108 from the UBC data to the authenticating entity 90, the authenticating entity 90 analyzes the released biometric and personal data, and associated security feature, to determine whether or not the released biometric and personal data are acceptable 116. Specifically, the authenticating entity 90 verifies that the released biometric and personal data correspond to the requested biometric feature and personal data, respectively. Moreover, the authenticating entity 90 validates the associated security feature to verify that the biometric and personal data were issued by a suitable issuer, and to verify that the released biometric and personal data are certified.

Otherwise, if the released biometric data and personal data do not correspond to the desired, or requested, biometric feature and personal data, respectively, the released data is not acceptable 116. Moreover, if the authenticating entity 90 cannot validate the security feature, the released biometric and personal data are not acceptable 116. Furthermore, it should be appreciated that when the security feature cannot be validated evidence of a link between the requested biometric and personal data cannot be provided. The authenticating entity then prompts 118 the carrying device 54 for the same data as originally requested 104. If the carrying device 54 contains such information 118 and the appropriate default rule 94 permits releasing it 106, the carrying device 54 releases 108 the requested biometric and personal data, and associated security feature, to the authenticating entity 90. Otherwise, the process ends 114.

After the authenticating entity 90 determines that the released data is acceptable 116, the identity of the user in possession of the carrying device 54 is confirmed 120. During confirmation, initially, actual biometric data of the user corresponding to the released biometric data is electronically captured. For example, face biometric data of the user may be electronically captured by the authenticating entity 90 and compared against released face biometric data. The confidence score is determined based on the biometric comparison match.

When the confidence score is at least equal to a predetermined threshold value, the biometric link 86 is authenticated. Upon authenticating the biometric link 86 and validating the security feature, the identity of the user in possession of the device 54 is properly confirmed 120 and an output is generated 122. The output 122 constitutes a message on the monitor that includes the confidence score, an identification result showing whether the authentication succeeded or failed, and may include personal data. However, it should be appreciated that in other examples the generated output 122 may constitute any action that indicates a result of the identification confirmation 120. Such actions include, but are not limited to, opening a physical access barrier, providing logical access and any other kind of automated action in addition to or in place of the message. After generating the output 122, the process ends 114.

Otherwise, if the confidence score is less than the predetermined threshold value, the identity of the user is not properly confirmed, and the process ends 114.

In an example illustrating the exemplary process 96, after a carrying device 54 has been presented 100, a stable national government authenticating entity 90 requests 104 face biometric authentication of the biometric link 86 with certified evidence of a face-age link, that is, logical link L1, from a stable national government. In response, the carrying device 54 consults the user configurable policy 88 stored therein to determine whether or not the requested biometric and personal data are permitted to be released 106 from the UBC data. Specifically, the carrying device 54 consults the policy 88 and determines that the appropriate default rule 94 permits releasing all requested biometric data and all requested personal data from the UBC data to stable national government authenticating entities 90. Thus, the carrying device 54 selects the requested face biometric data and age personal data, as well as the security feature DIG. SIG 1 associated with the face biometric data and age personal data, to release 108 to the stable national government authenticating entity 90.

Initially, the authenticating entity 90 consults the authenticating default rule corresponding to the security feature DIG. SIG. 1 and determines that the authentication default rule for security features from stable national governments indicates that all biometric data and all personal data associated with the security feature DIG. SIG. 1 are acceptable for authentication. Moreover, the authenticating entity 90 determines that the security feature, DIG. SIG. 1, associated with the released face biometric data is from a suitable issuer by validating the security feature DIG. SIG. 1. The authenticating entity 90 also validates the security feature DIG SIG. 1 to ensure that the security feature itself is trustworthy. By validating the security feature DIG. SIG. 1, the authenticating entity 90 certifies that the released face biometric data and the released personal data are trustworthy, have not been modified, and were issued in an original credential by a stable national government, that is, a stated suitable issuer. Moreover, by validating the security feature, the validated security feature constitutes the logical link L1 which constitutes the certified evidence of the face-age link requested by the stable national government authenticating entity 90.

Face biometric data is electronically captured from the user and is compared against the released face biometric data. Link 86 is successfully authenticated because the confidence score is determined to be at least equal to the predetermined threshold value. Because the biometric link 86 was successfully authenticated using face biometric data and because the validated security feature was provided as certified evidence of the face-age link, the identity of the user in possession of the device 54 is properly confirmed 120.

It should be appreciated that although the above described example electronically captures face biometric data of the user, in other examples, biometric data representing any feature of the user in possession of the carrying device 54 may be electronically captured and used for comparison against corresponding biometric UBC data. Moreover, it should be appreciated that in other examples, a plurality of different biometric features of the user may be compared against corresponding biometric data included in the UBC data to authenticate link 86. Furthermore, it should be appreciated that different biometric data representing a same biometric feature may be included in the UBC data, and each of the different biometric data may be compared against the captured biometric data during authentication of link 86. For example, when the requested biometric data is fingerprint data, the fingerprint data included in the UBC data that was originally obtained from both the first and third credentials may be compared against fingerprints captured during authentication of link 86. In situations where a single fingerprint is captured, if the first and third credential fingerprint data both represent the single captured fingerprint, they can both be compared against the captured fingerprint. Moreover, in situations where a plurality of fingerprints are captured, if the first and third credential fingerprint data represent different captured fingerprints, they can each be compared against the corresponding captured fingerprint.

Although biometric data is electronically captured from the user during authentication of link 86 , it should be appreciated that in other examples biometric data is not electronically captured from the user. In other examples security personnel of the authenticating entity may manually compare the user in possession of the device 54 against biometric data of the user to authenticate the link 86.

Moreover, it should be understood that in other examples, the authenticating entity may use electronic security features associated with issuers of the original biometric credential data, and additional electronic security features added by other issuers, verifiers or users subsequent to initially assembling the original UBC data, as the basis for authentication. Furthermore, it should be appreciated that security may be facilitated to be enhanced by combining biometric identity data electronically captured by many different independent authenticating entities as the biometric UBC data, and by adding additional electronic security features to relevant parts of the UBC data that relate to other independent authenticating entities that have authenticated the user in possession of the device 54 using the relevant parts of the UBC data.

Although biometric data is used to prove the identity of the user in possession of the carrying device 54, it should be understood that in other examples non-biometric techniques may be used. Such techniques include, but are not limited to, entering a user personal identification number (PIN) or user password into the carrying device 54 for authentication. Thus, it should be appreciated that any technique may be used that facilitates properly confirming the identity of a user in possession of a carrying device 54.

The negotiations 102 occur automatically between the carrying device 54 and the authentication workstation 48, which workstation 48 is operated by the authenticating entity 90 at the authenticating station. Although the negotiations 102 are automatically performed, it should be appreciated that in other examples, the negotiations 102 may be performed manually between the user in possession of the device 54 and security personnel at the authentication station. For example, in other examples, security personnel may cause a prompt to appear on a screen of the carrying device 54 that causes the user to accept or reject releasing the requested biometric data and personal data from the UBC data. In response, the user may click on the icon to release the requested information. It should be appreciated that the prompt may include, but not be limited to, an icon and a voice message requesting the user to accept or reject releasing the requested biometric data.

It should be appreciated that the carrying device 54, including the UBC data, may be substituted for any credential containing electronic data. For example, the device 54 may be substituted for special membership cards such as registered traveler program cards and private membership cards. Substituting the carrying device 54 for credentials containing electronic information facilitates allowing individuals to carry fewer separate credentials and facilitates reducing the likelihood of losing credentials. Moreover, it should be appreciated that the carrying device 54 may be used for singular verifications such as proving identity to a police officer at a traffic stop, and proving age to purchase merchandise or to enter certain restricted premises. Because the UBC is a collection of electronic data that can be easily and securely backed up, there are few negative consequences as a result of losing the carrying device 54.

Although original biometric credentials are collected and processed to create the UBC data for an individual , it should be appreciated that in other examples multiple original biometric credentials of a plurality of individuals, or of a group of associated individuals, may be collected and included in the same UBC data. For example, in a group of associated individuals such as a family, the biometric credentials of each family member may be processed and included in UBC data stored on the same UBC carrying device 54. When performing a group activity such as traveling, a responsible member of the family, usually a parent, may carry the UBC carrying device 54 such that other family members are not required to carry their own multiple biometric credentials. Thus, the UBC carrying device 54 may be used to facilitate reducing authentication problems that may develop should a family member lose his or her own personal biometric credentials.

The above-described methods and systems facilitate reducing the need to carry several different original biometric credentials by transforming an existing personal device into a universal biometric credential. Specifically, the biometric and personal data included in a plurality of different biometric credentials may be extracted and used to create a new set of biometric data and a new set of personal data. The new sets of data may be converted into a universal format such that the new sets of data may be stored on a carrying device. As a result of storing the new set of biometric data in the universal format on a carrying device, the carrying device may be easily transformed into a universal biometric credential (UBC). Moreover, the above-described methods and systems facilitate accurately confirming the identity of a user in possession of the carrying device using only the biometric and personal data contained within the carrying device. Furthermore, the above-described methods and systems protect access to biometric and personal data contained within the UBC device by releasing biometric and personal data to an authenticating entity only in accordance with a user configurable policy. By authenticating a biometric link between the user and an item of certified biometric data stored in the carrying device, as well as providing certified evidence of a link between the biometric data and desired personal data also stored in the carrying device, the methods and system described herein facilitate using the carrying device as a Universal Biometric Credential to confirm the identity of the user.

The method of creating the UBC and authenticating identities using the UBC carrying device facilitates reducing the number of different biometric credentials carried by individuals, facilitates reducing the costs and requirements for secondary issuers of biometric credentials to enroll separate versions of a subject's biometrics, and facilitates removing the need to perform identification (1:N) background searches. Moreover, the method facilitates reducing the number of different biometric credentials that are to be carried by combining multiple biometric credentials into a single set of biometric credentials, and by converting the single set of biometric credentials into a universal format that may be stored on an existing personal device. As a result, secondary issuers of biometric credentials are not required to create separate biometric credentials including separate versions of a subject's biometrics, and individuals are not required to carry multiple credentials. Accordingly, because a large number of original biometric credentials may be included on a single biometric credential and easily used for comparison, the likelihood that an authentication is proper is facilitated to increase because as the number of compared biometric features increases, the likelihood that an authentication is proper also increases. Moreover, security is facilitated to be enhanced by combining the biometric identity data captured by many different independent entities and by adding additional electronic security features to relevant parts of the UBC data from other independent entities who have verified the user in possession of the UBC carrying device as the owner of the UBC data using the relevant parts of the UBC data.

Furthermore, the present invention can be implemented as a program stored on a computer-readable recording medium, that causes a computer to execute the methods described herein to create UBC data and to authenticate a user in possession of a UBC carrying device as the owner of the UBC data. The program can be distributed via a computer-readable storage medium such as, but not limited to, a CD-ROM.

## Claims

1. A method of confirming the identity of a user comprising:
processing a plurality of original biometric credentials which are physical objects having means for storing biometric data associated to a biometric security feature and personal data associated to a personal security feature, the biometric security feature and the personal security feature having been applied to the original biometric credentials by corresponding original issuers of the original biometric credential, storing (70) the biometric (76) and personal data together with the biometric and personal security features (78) collected from the original biometric credentials during processing thereof on a device (54) as device data,
generating a user configurable policy (88) comprising identities of a plurality of authenticating entities (90), each of the authenticating entities (90) being associated with one of a plurality of levels of trust (92) and a default rule (94) corresponding to the one level of trust (92), wherein the default rule (94) is one of a plurality of default rules (94) that permit releasing a portion of the device data in accordance with a corresponding one of the levels of trust (92), and the plurality of levels of trust and the default rules are changeable by the user;
storing the user configurable policy (88) in the device (54);
presenting (100), by a user in possession of the device (54), the device (54) to one of the authenticating entities (90) at an authentication station;
requesting (104) biometric (76) and personal data (78) of the user from the device data, the biometric data corresponding to at least one biometric feature desired for authenticating the user, said requesting operation (104) being performed by a workstation (48) of the one authenticating entity (90);
consulting the user configurable policy (88) in response to said requesting operation (104) to determine whether the requested biometric data (76) is permitted to be released from the device data;
releasing (108) the requested biometric (76) and personal data (78) from the device data to the one authenticating entity (90) when the default rule (94) associated with the one authenticating entity (90) permits releasing the requested biometric (76) and personal data (78);
validating a logical link between the user in possession of the device (54) and the released personal data (78) by establishing a logical link between the released personal data (78) and the released biometric data (76) by certifying that the biometric security feature associated with the released biometric data (76) and the personal security feature associated with the released personal data (78) have not been modified and were issued in an original credential by a suitable issuer, and authenticating a biometric link (86) between the user and the released biometric data (76) by comparing the released biometric data (76) against actual biometric data captured from the user in possession of the device (54); and
generating an output (122) after said validating operation indicating a result of said validating operation.

2. A method of confirming the identity of a user in accordance with claim 1, said processing operation comprising:
extracting (66) an original security feature corresponding to the biometric and personal data from each of the original biometric credentials, wherein the original security feature for each original biometric credential is different;
processing (68) the extracted biometric and personal data to generate a set of biometric data (76) and a set of personal data (78), respectively, by converting the extracted biometric and personal data into a computer-readable data containing format such that the original security feature corresponding to the biometric and personal data extracted from a same original biometric credential is separately associated with the corresponding biometric data as the biometric security feature and is separately associated with the corresponding personal data as the personal security feature; and
storing the set of biometric data (76) and the set of personal data (78) in the device (54).

3. A method of confirming the identity of a user in accordance with claim 2, further comprising associating an additional security feature with an item of biometric data (76) included in the set of biometric data (76) and associating the additional security feature with at least one item of personal data (78) included in the set of personal data (78), wherein the at least one item of personal data (78) is from a different original biometric credential than the item of biometric data (76).

4. A method of confirming the identity of a user in accordance with claim 1, further comprising prompting (110) the one authenticating entity (90) to select from alternative biometric data (76) and personal data (78) that an appropriate default rule (94) permits releasing from the device data, when the appropriate default rule (94) does not permit releasing the requested biometric (76) and personal data (78) from the device data.

5. A method of confirming the identity of a user in accordance with claim 1, further comprising prompting (118) the device (54) to release the requested biometric (76) and personal data (78) after determining that the released biometric data (76) and the released personal data (78) are not acceptable for authentication by the authenticating entity (90).

6. A method for confirming the identity of a user in accordance with claim 1, further comprising changing the levels of trust (92) associated with corresponding trusted authenticating entities (90) and changing the default rules (94) corresponding to the levels of trust (92) in response to user input.

7. A system for confirming the identity of a user comprising:
at least one computer (20) configured as a server (12), said server (12) including a database (16, 32);
at least one workstation (48) positioned at an authenticating station, said workstation (48) comprising at least a workstation computer operationally coupled to a biometric credential reading device (52), wherein said server (12) and said at least one workstation (48) communicate; and
a device (54) having stored therein a set of biometric data (76) and a set of personal data (78) as device data, wherein each item of biometric data (76) included in the set of biometric data (76) corresponds to an item of personal data (78) included in the set of personal data (78), such that each item of biometric data (76) is associated with a biometric security feature and each item of corresponding personal data (78) is associated with a personal security feature, said device (54) being configured to store a user configurable policy (88) comprising identities of a plurality of trusted authenticating entities (90), each of the trusted authenticating entities (90) being associated with one of a plurality of levels of trust (92) and a default rule (94) corresponding to the one level of trust (92), the default rule (94) being one of a plurality of default rules (94) that permit releasing a portion of the device data in accordance with a corresponding one of the levels of trust (92), wherein each item of biometric data (76) includes at least one representation of a biometric feature of an individual and the plurality of levels of trust and the default rules are changeable by the user,
consult the user configurable policy (88) in response to a request for biometric (76) and personal data (78), to determine whether the requested biometric (76) and personal data (78) are permitted to be released from the device data, and
release the requested biometric (76) and personal data (78) from the device data when an appropriate one of the default rules (94) permits releasing the requested biometric (76) and personal data (78); and
wherein said at least one workstation (48) is configured to:
request biometric (76) and personal data (78) of a user in possession of said device (54) from said device data when the user presents said device (54) to said at least one workstation (48), the biometric data (76) corresponding to at least one biometric feature desired to be used for authenticating the user;
validate a logical link between the user and personal data (78) released by said device (54) by establishing a logical link between the personal data (78) and biometric data (76) released by said device (54) by certifying that the biometric security feature associated with the released biometric data (76) and the personal security feature associated with the released personal data (78) have not been modified and were issued in an original credential by a suitable issuer, and authenticating a biometric link (86) between the user and the released biometric data (76) by comparing the released biometric data (76) against actual biometric data captured from the user; and
generate an output (122) indicating whether or not the logical link between the user and the released personal data (78) was validated.

8. A system for confirming the identity of a user in accordance with claim 7, wherein said device (54) is further configured to change the levels of trust (92) associated with corresponding trusted authenticating entities (90) and to change the default rules (94) corresponding to the levels of trust (92) in response to user input.

9. A system for confirming the identity of a user in accordance with claim 7, wherein said workstation (48) is further configured to prompt said device (54) to release the requested biometric (76) and personal data (78) after determining that the released biometric data (76) and the released personal data (78) are not acceptable for authentication by the trusted authenticating entity (90).

10. A system for confirming the identity of a user in accordance with claim 7, wherein said server (12) comprises a processor configured to:
extract biometric data, personal data and an original security feature corresponding to the biometric and personal data from each of the plurality of original biometric credentials, wherein the original security feature for each original biometric credential is different; and
process the extracted biometric and personal data to generate the set of biometric data (76) and the set of personal data (78), respectively, by converting the extracted biometric and personal data to a computer-readable data containing format such that the original security feature corresponding to the biometric (76) and personal data (78) extracted from a same original biometric credential is separately associated with the corresponding biometric data (76) as the biometric security feature and is separately associated with the corresponding personal data (78) as the personal security feature.

11. A system for confirming the identity of a user in accordance with claim 10, wherein said processor is further configured to associate at least one item of biometric data (76) included in the set of biometric data (76) with each item of personal data (78) included in the set of personal data (78) that is from a different original biometric credential than the at least one item of biometric data (76), and to separately associate an additional security feature with the at least one item of biometric data (76) and each item of personal data (78) that is from a different original biometric credential than the at least one item of biometric data (76).

12. A system for confirming the identity of a user in accordance with claim 7, wherein said device (54) is further configured to prompt said workstation (48) to select from alternative biometric data (76) and personal data (78) that an appropriate default rule (94) permits releasing from said device data, when the appropriate default rule (94) does not permit releasing the requested biometric (76) and personal data (78) from said device data.

13. A system for confirming the identity of a user in accordance with claim 7, wherein said device is further configured to associate an additional security feature with an item of biometric data (76) included in the set of biometric data (76) and associate the additional security feature with at least one item of personal data (78) included in the set of personal data (78), wherein the at least one item of personal data (78) is from a different original biometric credential than the item of biometric data (76).

## Patentansprüche

1. Verfahren zur Bestätigung der Identität eines Benutzers, umfassend:
Verarbeiten mehrerer ursprünglicher biometrischer Berechtigungsnachweise, welche physische Objekte sind mit Mitteln zum Speichern biometrischer Daten, die einem biometrischen Sicherheitsmerkmal zugeordnet sind, und persönlicher Daten, die einem persönlichen Sicherheitsmerkmal zugeordnet sind, wobei das biometrische Sicherheitsmerkmal und das persönliche Sicherheitsmerkmal auf die ursprünglichen biometrischen Berechtigungsnachweise angewandt worden sind durch entsprechende ursprüngliche Aussteller des ursprünglichen biometrischen Berechtigungsnachweises, Speichern (70) der biometrischen (76) und persönlichen (78) Daten zusammen mit den biometrischen und persönlichen Sicherheitsmerkmalen, gesammelt aus den ursprünglichen biometrischen Berechtigungsnachweisen während des Verarbeitens derselben, auf einer Vorrichtung (54) als Vorrichtungsdaten,
Erzeugen einer benutzerkonfigurierbaren Richtlinie (88), welche Identitäten mehrerer Authentifizierungsentitäten (90) umfasst, wobei jede der Authentifizierungsentitäten (90) einer von mehreren Vertrauensstufen (92) und einer Standardregel (94) zugeordnet ist, die der einen Vertrauensstufe (92) entspricht, wobei die Standardregel (94) eine von mehreren Standardregeln (94) ist, die ein Freigeben eines Teils der Vorrichtungsdaten in Übereinstimmung mit einer entsprechenden der Vertrauensstufen (92) genehmigen, und die mehreren Vertrauensstufen und die Standardregeln durch den Benutzer änderbar sind;
Speichern der benutzerkonfigurierbaren Richtlinie (88) in der Vorrichtung (54);
Vorweisen (100), durch einen Benutzer im Besitz der Vorrichtung (54), der Vorrichtung (54) vor einer der Authentifizierungsentitäten (90) an einer Authentifizierungsstation;
Anfordern (104) biometrischer (76) und persönlicher (78) Daten des Benutzers aus den Vorrichtungsdaten, wobei die biometrischen Daten zumindest einem biometrischen Merkmal entsprechen, das für die Authentifizierung des Benutzers gewünscht wird, wobei der Anforderungsvorgang (104) durch eine Workstation (48) der einen Authentifizierungsentität (90) durchgeführt wird;
Konsultieren der benutzerkonfigurierbaren Richtlinie (88) in Reaktion auf den Anforderungsvorgang (104), um festzustellen, ob das Freigeben der angeforderten biometrischen Daten (76) aus den Vorrichtungsdaten genehmigt ist;
Freigeben (108) der angeforderten biometrischen (76) und persönlichen (78) Daten aus den Vorrichtungsdaten für die eine Authentifizierungsentität (90), wenn die der einen Authentifizierungsentität (90) zugeordnete Standardregel (94) das Freigeben der angeforderten biometrischen (76) und persönlichen (78) Daten genehmigt;
Validieren einer logischen Verbindung zwischen dem Benutzer im Besitz der Vorrichtung (54) und den freigegebenen persönlichen Daten (78) durch Etablieren einer logischen Verbindung zwischen den freigegebenen persönlichen Daten (78) und den freigegebenen biometrischen Daten (76) durch Zertifizieren, dass das den freigegebenen biometrischen Daten (76) zugeordnete biometrische Sicherheitsmerkmal und das den freigegebenen persönlichen Daten (78) zugeordnete persönliche Sicherheitsmerkmal nicht modifiziert worden sind und in einem ursprünglichen Berechtigungsnachweis durch einen geeigneten Aussteller ausgestellt wurden, und Authentifizieren einer biometrischen Verbindung (86) zwischen dem Benutzer und den freigegebenen biometrischen Daten (76) durch Abgleichen der freigegebenen biometrischen Daten (76) mit aktuellen biometrischen Daten, die vom Benutzer im Besitz der Vorrichtung (54) erfasst werden; und
Erzeugen einer Ausgabe (122) nach dem Validierungsvorgang, die ein Ergebnis des Validierungsvorgangs angibt.

2. Verfahren zur Bestätigung der Identität eines Benutzers nach Anspruch 1, wobei der Verarbeitungsvorgang umfasst:
Extrahieren (66) eines ursprünglichen Sicherheitsmerkmals, das den biometrischen und persönlichen Daten entspricht, aus jedem der ursprünglichen biometrischen Berechtigungsnachweise, wobei das ursprüngliche Sicherheitsmerkmal für jeden ursprünglichen biometrischen Berechtigungsnachweis anders ist;
Verarbeiten (68) der extrahierten biometrischen und persönlichen Daten, um jeweils einen Satz biometrischer Daten (76) und einen Satz persönlicher Daten (78) zu erzeugen, durch Umwandeln der extrahierten biometrischen und persönlichen Daten in ein computerlesbare Daten enthaltendes Format so, dass das ursprüngliche Sicherheitsmerkmal, das den aus einem selben ursprünglichen biometrischen Berechtigungsnachweis extrahierten biometrischen und persönlichen Daten entspricht, separat den entsprechenden biometrischen Daten als das biometrische Sicherheitsmerkmal zugeordnet wird und separat den entsprechenden persönlichen Daten als das persönliche Sicherheitsmerkmal zugeordnet wird; und
Speichern des Satzes biometrischer Daten (76) und des Satzes persönlicher Daten (78) in der Vorrichtung (54).

3. Verfahren zur Bestätigung der Identität eines Benutzers nach Anspruch 2, weiterhin umfassend das Zuordnen eines zusätzlichen Sicherheitsmerkmals zu einem Element biometrischer Daten (76), das in dem Satz biometrischer Daten (76) enthalten ist, und das Zuordnen des zusätzlichen Sicherheitsmerkmals zu zumindest einem Element persönlicher Daten (78), das in dem Satz persönlicher Daten (78) enthalten ist, wobei das zumindest eine Element persönlicher Daten (78) aus einem anderen ursprünglichen biometrischen Berechtigungsnachweis ist als das Element biometrischer Daten (76).

4. Verfahren zur Bestätigung der Identität eines Benutzers nach Anspruch 1, das weiterhin das Auffordern (110) der einen Authentifizierungsentität (90) umfasst, aus alternativen biometrischen Daten (76) und persönlichen Daten (78), deren Freigabe aus den Vorrichtungsdaten eine adäquate Standardregel (94) genehmigt, zu wählen, wenn die adäquate Standardregel (94) das Freigeben der angeforderten biometrischen (76) und persönlichen (78) Daten aus den Vorrichtungsdaten nicht genehmigt.

5. Verfahren zur Bestätigung der Identität eines Benutzers nach Anspruch 1, das weiterhin das Auffordern (118) der Vorrichtung (54), die angeforderten biometrischen (76) und persönlichen (78) Daten freizugeben, nach der Feststellung umfasst, dass die freigegebenen biometrischen Daten (76) und die freigegebenen persönlichen Daten (78) nicht akzeptabel für eine Authentifizierung durch die Authentifizierungsentität (90) sind.

6. Verfahren zur Bestätigung der Identität eines Benutzers nach Anspruch 1, das weiterhin das Ändern der Vertrauensstufen (92), die entsprechenden vertrauenswürdigen Authentifizierungsentitäten (90) zugeordnet sind, und das Ändern der Standardregeln (94), die den Vertrauensstufen (92) entsprechen, in Reaktion auf eine Benutzereingabe umfasst.

7. System zur Bestätigung der Identität eines Benutzers, umfassend:
zumindest einen als Server (12) konfigurierten Computer (20), wobei der Server (12) eine Datenbank (16, 32) beinhaltet;
zumindest eine bei einer Authentifizierungsstation positionierte Workstation (48), wobei die Workstation (48) zumindest einen Workstation-Computer umfasst, der funktionell an eine Vorrichtung (52) zum Lesen biometrischer Berechtigungsnachweise gekoppelt ist, wobei der Server (12) und die zumindest eine Workstation (48) kommunizieren; und
eine Vorrichtung (54), in der ein Satz biometrischer Daten (76) und ein Satz persönlicher Daten (78) als Vorrichtungsdaten gespeichert sind, wobei jedes Element biometrischer Daten (76), das in dem Satz biometrischer Daten (76) enthalten ist, einem Element persönlicher Daten (78), das in dem Satz persönlicher Daten (78) enthalten ist, entspricht, so dass jedes Element biometrischer Daten (76) einem biometrischen Sicherheitsmerkmal zugeordnet ist und jedes Element entsprechender persönlicher Daten (78) einem persönlichen Sicherheitsmerkmal zugeordnet ist, wobei die Vorrichtung (54) zum Speichern einer benutzerkonfigurierbaren Richtlinie (88) konfiguriert ist, welche Identitäten mehrerer vertrauenswürdiger Authentifizierungsentitäten (90) umfasst, wobei jede der vertrauenswürdigen Authentifizierungsentitäten (90) einer von mehreren Vertrauensstufen (92) und einer Standardregel (94) zugeordnet ist, die der einen Vertrauensstufe (92) entspricht, wobei die Standardregel (94) eine von mehreren Standardregeln (94) ist, die ein Freigeben eines Teils der Vorrichtungsdaten in Übereinstimmung mit einer entsprechenden der Vertrauensstufen (92) genehmigen, wobei jedes Element biometrischer Daten (76) zumindest eine Darstellung eines biometrischen Merkmals eines Individuums einschließt und die mehreren Vertrauensstufen und die Standardregeln durch den Benutzer änderbar sind,
Konsultieren der benutzerkonfigurierbaren Richtlinie (88) in Reaktion auf eine Anforderung biometrischer (76) und persönlicher (78) Daten, um festzustellen, ob das Freigeben der angeforderten biometrischen (76) und persönlichen (78) Daten aus den Vorrichtungsdaten genehmigt ist, und
Freigeben der angeforderten biometrischen (76) und persönlichen (78) Daten aus den Vorrichtungsdaten, wenn eine adäquate der Standardregeln (94) das Freigeben der angeforderten biometrischen (76) und persönlichen (78) Daten genehmigt; und
wobei die zumindest eine Workstation (48) konfiguriert ist zum:
Anfordern im Besitz der Vorrichtung (54) befindlicher biometrischer (76) und persönlicher (78) Daten eines Benutzers aus den Vorrichtungsdaten, wenn der Benutzer die Vorrichtung (54) vor der zumindest einen Workstation (48) vorweist, wobei die biometrischen Daten (76) zumindest einem biometrischen Merkmal entsprechen, dessen Verwendung für die Authentifizierung des Benutzers gewünscht wird;
Validieren einer logischen Verbindung zwischen dem Benutzer und von der Vorrichtung (54) freigegebenen persönlichen Daten (78) durch Etablieren einer logischen Verbindung zwischen den von der Vorrichtung (54) freigegebenen persönlichen Daten (78) und biometrischen Daten (76) durch Zertifizieren, dass das den freigegebenen biometrischen Daten (76) zugeordnete biometrische Sicherheitsmerkmal und das den freigegebenen persönlichen Daten (78) zugeordnete persönliche Sicherheitsmerkmal nicht modifiziert worden sind und in einem ursprünglichen Berechtigungsnachweis durch einen geeigneten Aussteller ausgestellt wurden, und Authentifizieren einer biometrischen Verbindung (86) zwischen dem Benutzer und den freigegebenen biometrischen Daten (76) durch Abgleichen der freigegebenen biometrischen Daten (76) mit vom Benutzer erfassten aktuellen biometrischen Daten; und
Erzeugen einer Ausgabe (122), die angibt, ob die logische Verbindung zwischen dem Benutzer und den freigegebenen persönlichen Daten (78) validiert wurde oder nicht.

8. System zur Bestätigung der Identität eines Benutzers nach Anspruch 7, wobei die Vorrichtung (54) weiterhin konfiguriert ist zum Ändern der Vertrauensstufen (92), die entsprechenden vertrauenswürdigen Authentifizierungsentitäten (90) zugeordnet sind, und zum Ändern der Standardregeln (94), die den Vertrauensstufen (92) entsprechen, in Reaktion auf eine Benutzereingabe.

9. System zur Bestätigung der Identität eines Benutzers nach Anspruch 7, wobei die Workstation (48) weiterhin konfiguriert ist zum Auffordern der Vorrichtung (54), die angeforderten biometrischen (76) und persönlichen (78) Daten freizugeben, nach Feststellung, dass die freigegebenen biometrischen Daten (76) und die freigegebenen persönlichen Daten (78) nicht akzeptabel für eine Authentifizierung durch die vertrauenswürdige Authentifizierungsentität (90) sind.

10. System zur Bestätigung der Identität eines Benutzers nach Anspruch 7, wobei der Server (12) einen Prozessor umfasst, der konfiguriert ist zum:
Extrahieren biometrischer Daten, persönlicher Daten und eines ursprünglichen Sicherheitsmerkmals, das den biometrischen und persönlichen Daten entspricht, aus jedem der mehreren ursprünglichen biometrischen Berechtigungsnachweise, wobei das ursprüngliche Sicherheitsmerkmal für jeden ursprünglichen biometrischen Berechtigungsnachweis anders ist; und
Verarbeiten der extrahierten biometrischen und persönlichen Daten, um jeweils den Satz biometrischer Daten (76) und den Satz persönlicher Daten (78) zu erzeugen, durch Umwandeln der extrahierten biometrischen und persönlichen Daten in ein computerlesbare Daten enthaltendes Format so, dass das ursprüngliche Sicherheitsmerkmal, das den aus einem selben ursprünglichen biometrischen Berechtigungsnachweis extrahierten biometrischen (76) und persönlichen (78) Daten entspricht, separat den entsprechenden biometrischen Daten (76) als das biometrische Sicherheitsmerkmal zugeordnet wird und separat den entsprechenden persönlichen Daten (78) als das persönliche Sicherheitsmerkmal zugeordnet wird.

11. System zur Bestätigung der Identität eines Benutzers nach Anspruch 10, wobei der Prozessor weiterhin konfiguriert ist zum Zuordnen zumindest eines im Satz biometrischer Daten (76) enthaltenen Elements biometrischer Daten (76) zu jedem im Satz persönlicher Daten (78) enthaltenen Element persönlicher Daten (78), das aus einem anderen ursprünglichen Berechtigungsnachweis ist als das zumindest eine Element biometrischer Daten (76), und zum separaten Zuordnen eines zusätzlichen Sicherheitsmerkmals zu dem zumindest einen Element biometrischer Daten (76) und jedem Element persönlicher Daten (78), das aus einem anderen ursprünglichen biometrischen Berechtigungsnachweis ist als das zumindest eine Element biometrischer Daten (76).

12. System zur Bestätigung der Identität eines Benutzers nach Anspruch 7, wobei die Vorrichtung (54) weiterhin konfiguriert ist, um die Workstation (48) aufzufordern, aus alternativen biometrischen Daten (76) und persönlichen Daten (78), deren Freigabe aus den Vorrichtungsdaten eine adäquate Standardregel (94) genehmigt, zu wählen, wenn die adäquate Standardregel (94) das Freigeben der angeforderten biometrischen (76) und persönlichen (78) Daten aus den Vorrichtungsdaten nicht genehmigt.

13. System zur Bestätigung der Identität eines Benutzers nach Anspruch 7, wobei die Vorrichtung weiterhin konfiguriert ist, um ein zusätzliches Sicherheitsmerkmal einem Element biometrischer Daten (76), das in dem Satz biometrischer Daten (76) enthalten ist, zuzuordnen und um das zusätzliche Sicherheitsmerkmal zumindest einem Element persönlicher Daten (78), das in dem Satz persönlicher Daten (78) enthalten ist, zuzuordnen, wobei das zumindest eine Element persönlicher Daten (78) aus einem anderen ursprünglichen biometrischen Berechtigungsnachweis ist als das Element biometrischer Daten (76).

## Revendications

1. Procédé destiné à confirmer l'identité d'un utilisateur comprenant :
le traitement d'une pluralité d'informations d'identifications biométriques originaux qui sont des objets physiques qui présentent des moyens destinés à stocker des données biométriques associées à un dispositif de sécurité biométrique et des données personnelles associées à un dispositif de sécurité personnel, le dispositif de sécurité biométrique et le dispositif de sécurité personnel ayant été appliqués aux informations d'identifications biométriques originaux par des émetteurs originaux correspondants des informations d'identifications biométriques originaux, le stockage (70) des données biométriques (76) et des données personnelles ensemble avec les dispositifs (78) de sécurité biométrique et personnel collectées à partir des informations d'identifications biométriques originaux au cours de leur traitement sur un dispositif (54) en tant que données de dispositif ;
la génération d'une politique configurable par un utilisateur (88) qui comprend des identités d'une pluralité d'entités d'authentification (90), chacune des entités d'authentification (90) étant associée à l'un d'une pluralité de niveaux de confiance (92) et à une règle par défaut (94) qui correspond au niveau de confiance (92), dans lequel la règle par défaut (94) est l'une d'une pluralité de règles par défaut (94) qui permettent de libérer une partie des données de dispositif selon l'un correspondant des niveaux de confiance (92), et la pluralité de niveaux de confiance et les règles par défaut peuvent être modifiées par l'utilisateur ;
le stockage de la politique configurable par un utilisateur (88) dans le dispositif (54) ;
la présentation (100), par un utilisateur en possession du dispositif (54), du dispositif (54) à l'une des entités d'authentification (90) au niveau d'un poste d' authentification ;
la demande (104) de données biométriques (76) et de données personnelles (78) de l'utilisateur à partir des données de dispositif, les données biométriques correspondant à au moins un dispositif biométrique désiré pour authentifier l'utilisateur, ladite opération de demande (104) étant exécutée par un poste de travail (48) de l'entité d'authentification (90) ;
la consultation de la politique configurable par un utilisateur (88) en réponse à ladite opération de demande (104) de façon à déterminer si les données biométriques demandées (76) sont autorisées à être libérées à partir des données de dispositif ;
la libération (108) des données biométriques (76) et des données personnelles (78) demandées à partir des données de dispositif vers l'entité d'authentification (90) lorsque la règle par défaut (94) associée à l'entité d'authentification (90) permet de libérer les données biométriques (76) et les données personnelles (78) demandées ;
la validation d'un lien logique entre l'utilisateur en possession du dispositif (54) et les données personnelles (78) libérées en établissant un lien logique entre les données personnelles (78) libérées et les données biométriques (76) libérées en certifiant que le dispositif de sécurité biométrique associé aux données biométriques (76) libérées et que le dispositif de sécurité personnel associé aux données personnelles (78) libérées, n'ont pas été modifiés et ont été émis avec des informations d'identifications originaux par un émetteur approprié, et l'authentification d'un lien biométrique (86) entre l'utilisateur et les données biométriques (76) libérées en comparant les données biométriques (76) libérées avec des données biométriques véritables acquises en provenance de l'utilisateur en possession du dispositif (54) ; et
la génération d'une sortie (122) une fois que ladite opération de validation ait indiqué un résultat de ladite opération de validation.

2. Procédé destiné à confirmer l'identité d'un utilisateur selon la revendication 1, ladite opération de traitement comprenant :
l'extraction (66) d'un dispositif de sécurité original qui correspond à des données biométriques et à des données personnelles à partir de chacune des informations d'identifications biométriques originaux, dans lequel le dispositif de sécurité original de chaque information d'identification biométrique originale est différent ;
le traitement (68) des données biométriques et des données personnelles extraites de façon à générer un ensemble de données biométriques (76) et un ensemble de données personnelles (78), respectivement, en convertissant les données biométriques et les données personnelles extraites en données lisibles par un ordinateur, qui contiennent un format tel que le dispositif de sécurité original qui correspond aux données biométriques et aux données personnelles extraites à partir d'une même information d'identification biométrique originale soit associé de manière séparée aux données biométriques correspondantes en tant que dispositif de sécurité biométrique, et soit associé de manière séparée aux données personnelles correspondantes en tant que dispositif de sécurité personnel ; et
le stockage de l'ensemble de données biométriques (76) et l'ensemble de données personnelles (78) dans le dispositif (54).

3. Procédé destiné à confirmer l'identité d'un utilisateur selon la revendication 2, comprenant en outre l'association d'un dispositif de sécurité supplémentaire à une entité de données biométriques (76) inclus dans l'ensemble de données biométriques (76), et l'association du dispositif de sécurité supplémentaire à au moins une entité de données personnelles (78) incluse dans l'ensemble de données personnelles (78), dans lequel l'au moins une entité de données personnelles (78) provienne d'informations d'identifications biométriques originales différentes de l'entité de données biométriques (76).

4. Procédé destiné à confirmer l'identité d'un utilisateur selon la revendication 1, comprenant en outre à inviter (110) l'entité d'authentification (90) à choisir parmi des données biométriques (76) et des données personnelles (78) alternatives qu'une règle par défaut (94) appropriée permet de libérer à partir des données de dispositif, lorsque la règle par défaut appropriée (94) ne permet pas de libérer les données biométriques (76) et les données personnelles (78) demandées à partir des données de dispositif.

5. Procédé destiné à confirmer l'identité d'un utilisateur selon la revendication 1, comprenant en outre l'invitation (118) du dispositif (54) à libérer les données biométriques (76) et les données personnelles (78) demandées après avoir déterminé que les données biométriques (76) libérées et les données personnelles (78) libérées ne sont pas acceptables pour une authentification par l'entité d'authentification (90).

6. Procédé destiné à confirmer l'identité d'un utilisateur selon la revendication 1, comprenant en outre la modification des niveaux de confiance (92) associés aux entités d'authentification de confiance correspondantes (90), et la modification des règles par défaut (94) qui correspondent aux niveaux de confiance (92) en réponse à une entrée d'utilisateur.

7. Système destiné à confirmer l'identité d'un utilisateur comprenant :
au moins un ordinateur (20) configuré en tant que serveur (12), ledit serveur (12) comprenant une base de données (16, 32) ;
au moins un poste de travail (48) positionné au niveau d'un poste d'authentification, ledit poste de travail (48) comprenant au moins un ordinateur de poste de travail couplé de manière opérationnelle à un dispositif de lecture d'informations d'identifications biométriques (52), dans lequel ledit serveur (12) et ledit au moins un poste de travail (48) communiquent ; et
un dispositif (54) dans lequel sont stockées un ensemble de données biométriques (76) et un ensemble de données personnelles (78) en tant que données de dispositif, dans lequel chaque entité de données biométriques (76) incluses dans l'ensemble de données biométriques (76) correspond à une entité de données personnelles (78) incluse dans l'ensemble de données personnelles (78), de telle sorte que chaque entité de données biométriques (76) soit associée à un dispositif de sécurité biométrique et que chaque entité de données personnelles correspondantes (78) soit associée à un dispositif de sécurité personnel, ledit dispositif (54) étant configuré de façon à stocker une politique configurable par un utilisateur (88), qui comprend des identités d'une pluralité d'entités d'authentification de confiance (90), chacune des entités d'authentification de confiance (90) étant associée à l'un d'une pluralité de niveaux de confiance (92) et à une règle par défaut (94) qui correspond au niveau de confiance (92), la règle par défaut (94) étant l'une d'une pluralité de règles par défaut (94) qui permet de libérer une partie des données de dispositif selon l'un des niveaux de confiance (92) correspondant, dans lequel chaque entité de données biométriques (76) comprend au moins une représentation d'un dispositif biométrique d'un individu, et la pluralité de niveaux de confiance et les règles par défaut peuvent être modifiées par l'utilisateur ;
la consultation de la politique configurable par un utilisateur (88) en réponse à une demande de données biométriques (76) et de données personnelles (78), pour déterminer si les données biométriques (76) et les données personnelles (78) demandées sont autorisées à être libérées à partir des données de dispositif, et
la libération des données biométriques (76) et des données personnelles (78) demandées à partir des données de dispositif lorsque l'une des règles appropriée par défaut (94) permet de libérer les données biométriques (76) et les données personnelles (78) demandées ; et
dans lequel ledit au moins un poste de travail (48) est configuré pour :
demander des données biométriques (76) et des données personnelles (78) d'un utilisateur en possession dudit dispositif (54) à partir desdites données de dispositif lorsque l'utilisateur présente ledit dispositif (54) audit au moins un poste de travail (48), les données biométriques (76) correspondant à au moins une information d'identifications biométrique souhaitée au moins à utiliser pour authentifier l'utilisateur ;
valider un lien logique entre l'utilisateur et les données personnelles (78) libérées par ledit dispositif (54) en établissant un lien logique entre les données personnelles (78) et les données biométriques (76) libérées par ledit dispositif (54) en certifiant que le dispositif de sécurité biométrique associé aux données biométriques (76) libérées et que le dispositif de sécurité personnel associé aux données personnelles (78) libérées, n'ont pas été modifiés et ont été émis dans des informations d'identifications originales par un émetteur approprié, et authentifier un lien biométrique (86) entre l'utilisateur et les données biométriques (76) libérées en comparant les données biométriques (76) libérées avec des données biométriques réelles acquises en provenance de l'utilisateur ; et
générer une sortie (122) qui indique si le lien logique entre l'utilisateur et les données personnelles (78) libérées a été validé ou pas.

8. Système destiné à confirmer l'identité d'un utilisateur selon la revendication 7, dans lequel ledit dispositif (54) est configuré en outre pour modifier les niveaux de confiance (92) associés aux entités d'authentification de confiance correspondantes (90), et à modifier les règles par défaut (94) qui correspondent aux niveaux de confiance (92) en réponse à une entrée d'utilisateur.

9. Système destiné à confirmer l'identité d'un utilisateur selon la revendication 7, dans lequel ledit poste de travail (48) est configuré en outre pour inviter ledit dispositif (54) à libérer les données biométriques (76) et les données personnelles (78) demandées après avoir déterminé que les données biométriques (76) libérées et les données personnelles (78) libérées ne sont pas acceptables pour une authentification par l'entité d'authentification de confiance (90).

10. Système destiné à confirmer l'identité d'un utilisateur selon la revendication 7, dans lequel ledit serveur (12) comprend un processeur configuré pour :
extraire des données biométriques, des données personnelles et un dispositif de sécurité original qui correspond aux données biométriques et aux données personnelles à partir de chacune de la pluralité d'informations d'identifications biométriques originales, dans lequel le dispositif de sécurité original de chaque information d'identifications biométrique original est différente ; et
traiter les données biométriques et les données personnelles extraites pour générer l'ensemble de données biométriques (76) et l'ensemble de données personnelles (78), respectivement, en convertissant les données biométriques et les données personnelles extraites en données lisibles par un ordinateur, qui contiennent un format tel que le dispositif de sécurité original qui correspond aux données biométriques (76) et aux données personnelles (78) extraites à partir de même informations d'identifications biométriques originales, soit associé de manière séparée aux données biométriques (76) correspondantes en tant que dispositif de sécurité biométrique, et soit associé de manière séparée aux données personnelles (78) correspondantes en tant que dispositif de sécurité personnel.

11. Système destiné à confirmer l'identité d'un utilisateur selon la revendication 10, dans lequel ledit processeur est configuré en outre pour associer au moins une entité de données biométriques (76) incluse dans l'ensemble de données biométriques (76) à chaque entité de données personnelles (78) incluse dans l'ensemble de données personnelles (78) qui provient d'informations d'identifications biométriques originales différentes d'au moins l'une des entités de données biométriques (76), et à associer de manière séparée un dispositif de sécurité supplémentaire à l'au moins une entité de données biométriques (76), et à chaque entité de données personnelles (78) qui provient d'informations d'identifications biométriques originales différentes d'au moins une entité de l'au moins une entité de données biométriques (76).

12. Système destiné à confirmer l'identité d'un utilisateur selon la revendication 7, dans lequel ledit dispositif (54) est configuré en outre pour inviter (54) ledit poste de travail (48) à choisir parmi des données biométriques (76) et des données personnelles (78) alternatives qu'une règle par défaut (94) appropriée permet de libérer à partir desdites données de dispositif, lorsque la règle par défaut appropriée (94) ne permet pas de libérer les données biométriques (76) et les données personnelles (78) demandées à partir desdites données de dispositif.

13. Système destiné à confirmer l'identité d'un utilisateur selon la revendication 7, dans lequel ledit dispositif est configuré en outre pour associer un dispositif de sécurité supplémentaire à une entité de données biométriques (76) incluse dans l'ensemble de données biométriques (76), et à associer le dispositif de sécurité supplémentaire à au moins une entité de données personnelles (78) incluse dans l'ensemble de données personnelles (78), dans lequel l'au moins une entité de données personnelles (78) provient d'informations d'identifications biométriques originales différentes de l'entité de données biométriques (76).
